# FASCICULE DE BREVET EUROPEEN

(11) **EP 1 598 524 B1**
(45) Date de publication et mention de la délivrance du brevet: **16.07.2008**
(21) Numéro de dépôt: 05291014.8
(22) Date de dépôt: 11.05.2005
(51) Int. Cl.: F01D 5/34, F01D 25/28

(54) **Procédé d'assemblage de disques aubagés monoblocs et dispositif d'amortissement des vibrations des aubes de ces disques**
Verfahren der Montage beschaufelter Rotorscheiben und Dämpfungsvorrichung dieser Schaufeln
Assembly method for unitary vaned rotors and device for the damping of vane vibrations

(30) Priorité: 17.05.2004 FR 0405329
(43) Date de publication de la demande: 23.11.2005
(73) Titulaire: SNECMA, 75015 Paris (FR)
(72) Inventeur: Brouard, Didier, 77176 Nandy (FR); Ferte, Jean-Pierre, 91100 Corbeil-Essones (FR); Vassault, Marc, 91000 Evry (FR)
(74) Mandataire: Ramey, Daniel

(56) Documents cités:
- FR-A- 2 848 132
- GB-A- 2 255 138
- US-A- 5 486 262
- US-A- 5 551 623

## Description

La présente invention concerne un procédé d'assemblage de disques aubagés monoblocs et un dispositif d'amortissement des vibrations des aubes des disques pendant leur assemblage.

On connaît deux types de disques aubagés, celui dans lequel les aubes sont emboîtées dans des rainures périphériques des disques, et celui dans lequel les disques sont d'une seule pièce avec les aubes qui sont usinées sur la périphérie des disques (les disques de ce type étant appelés disques aubagés monoblocs).

Les disques aubagés monoblocs sont de plus en plus utilisés dans les compresseurs haute-pression et basse-pression des turboréacteurs, pour réduire la masse de ces derniers.

Les différents étages de disques peuvent être assemblés axialement par boulonnage, par soudage par faisceau d'électrons ou, en particulier quand les disques sont en alliage de nickel, par soudage par friction inertielle ou pilotée.

Le soudage par friction consiste à pousser fortement un disque fixe en rotation contre un autre disque qui tourne autour de son axe et qui est fixe en translation. La friction des faces des disques en contact dégage une grande quantité de chaleur qui élève la température de ces faces en contact et permet leur assemblage par soudage.

Toutefois, cette technique d'assemblage est source de vibrations intenses qui peuvent provoquer la mise en résonance des aubes des disques aubagés monoblocs et conduire à leur destruction par fissuration en fatigue vibratoire.

Le soudage par friction est donc réservé actuellement aux disques à attache mécanique des aubes, c'est-à-dire aux disques qui présentent des rainures périphériques de réception et de retenue des pieds d'aubes.

Une solution pourrait consister à assembler par soudage par friction des disques aubagés, monoblocs dont les aubes n'ont pas encore été usinées et résisteraient mieux aux vibrations, puis à réaliser l'usinage des aubes après l'opération de soudage des disques. Cependant, cette solution serait très coûteuse et risquée notamment en raison des difficiles d'utilisation d'un outillage spécifique d'usinage des aubes entre les disques assemblés.

L'invention a notamment pour but d'apporter une solution simple, efficace et économique à ces problèmes.

Elle propose à cet effet un procédé d'assemblage de disques aubagés monoblocs, qui est caractérisé en ce qu'il consiste à monter des moyens d'amortissement des vibrations sur et entre les aubes des disques, puis à souder les disques entre eux par friction, les moyens d'amortissement comprenant des moyens de recouvrement des aubes et de remplissage des espaces entre les aubes réalisés en un matériau élastiquement déformable.

WO-A-00/09861 constate que le coulage de cire de durcissement entre les aubes d'un stator monobloc est technique connue.

EP-A-1000697 décrit un dispositif de sevrage pour immobiliser une aube de rotor.

L'invention permet de réaliser l'assemblage de disques aubagés monoblocs par soudage par friction grâce aux moyens d'amortissement montés sur et entre les aubes, qui empêchent celles-ci d'entrer en résonance pendant la friction.

Le procédé selon l'invention consiste également à monter des moyens supplémentaires d'amortissement des vibrations entre les moyens d'amortissement montés sur les aubes d'un disque et la partie de la machine de soudage qui se trouve en regard des moyens d'amortissement montés sur les aubes.

Ceci permet d'amortir également au maximum les vibrations de l'ensemble formé par les aubes et leurs moyens d'amortissement, en particulier dans le cas des aubes de grande taille.

Avantageusement, ces moyens supplémentaires d'amortissement sont des blocs d'élastomère serrés entre ladite partie de la machine de soudage et les moyens d'amortissement montés sur les aubes.

Le procédé selon l'invention est en particulier destiné à l'assemblage des disques aubagés monoblocs dont les aubes ont été préalablement usinées, mais il serait applicable aussi à l'assemblage de disques dont les aubes n'ont été que partiellement usinées ou ne sont pas encore usinées.

L'invention propose également un dispositif d'amortissement des vibrations des aubes d'un disque aubagé monobloc, ce dispositif étant destiné à être monté sur les aubes du disque pour amortir les vibrations de ces aubes pendant l'assemblage du disque sur un autre disque par soudage par friction, et étant caractérisé en ce qu'il comprend des moyens de recouvrement des aubes et de remplissage des espaces entre les aubes, réalisés en un matériau élastiquement déformable, et des moyens de maintien et de serrage des moyens de recouvrement et de remplissage montés sur les aubes.

Dans un mode de réalisation préféré de l'invention, les moyens de recouvrement et de remplissage comprennent des garnitures annulaires destinées à être emboîtées sur les intrados et extrados des aubes, respectivement. Les surfaces des garnitures annulaires destinées à venir au contact des aubes ont préférentiellement des formes conjuguées de celles des aubes. Les moyens de recouvrement peuvent par exemple comprendre une première garniture annulaire destinée à être appliquée sur la face amont des aubes et du disque et une seconde garniture annulaire destinée à être appliquée sur la face aval des aubes et du disque, les faces en regard de ces deux garnitures ayant des formes qui sont conjuguées de celles des aubes et qui sont sensiblement complémentaires. Les garnitures peuvent avantageusement être réalisées dans des moules fabriqués par stéréolithographie à partir des fichiers numériques des formes des aubes.

Avantageusement, chaque garniture annulaire est réalisée en plusieurs éléments destinés à être placés circonférentiellement bout à bout.

Ceci facilite le montage des garnitures annulaires sur les aubes ou sur les moyens de maintien et de serrage des garnitures. Les garnitures sont réalisées en un élastomère approprié, tel que du silicone ou un polyuréthane.

Les moyens de maintien et de serrage des garnitures comprennent deux flasques annulaires en matériau rigide comportant chacun une face annulaire radiale d'appui et de support d'une garniture annulaire et un rebord périphérique pourvu de moyens de serrage axial des garnitures sur les aubes du disque. Les moyens de serrage axial comprennent par exemple des boulons ou des vis.

Ce dispositif a l'avantage d'être simple à réaliser et à mettre en place et comprend un nombre de pièces réduit.

De préférence, le dispositif comprend également des moyens de centrage et de positionnement des garnitures sur les flasques annulaires, tels par exemple que des plots formés en saillie sur les garnitures et reçus dans des cavités ou des orifices correspondants des flasques.

Les garnitures comprennent avantageusement des rebords annulaires radialement internes destinés à être appliqués et serrés par les flasques sur une couronne périphérique du disque sur laquelle sont formées les aubes. Chaque flasque est avantageusement réalisé en deux éléments semi-circulaires assemblés de façon amovible et démontable, par exemple par boulonnage.

Des cales de réglage peuvent être placées entre les flasques pour déterminer un degré de serrage axial des garnitures par les flasques. En variante, on peut utiliser une clef de serrage dynamométrique pour obtenir un résultat équivalent.

De façon générale, le dispositif selon l'invention présente les avantages suivants :
- il protège les aubes contre tout risque de détérioration pendant le soudage par friction ;
- il est réutilisable à volonté, les garnitures ou les éléments de garniture étant facilement remplaçables en cas d'usure ;
- sa mise en oeuvre est simple et facile;
- il est facilement démontable ;
- il est axialement peu encombrant et ne gène pas le soudage par friction des disques ;
- il est utilisable aussi bien sur un disque « fixe » que sur un disque « mobile » pendant le soudage par friction.

D'autres avantages et caractéristiques de l'invention apparaîtront à la lecture de la description suivante faite à titre d'exemple non limitatif et en référence aux dessins annexés dans lesquels :
- la figure 1 est une demi-vue schématique en coupe axiale de deux disques aubagés monoblocs montés sur une machine de soudage par friction ;
- la figure 2 est une vue schématique éclatée en perspective d'un disque et des moyens d'amortissement associés ;
- la figure 3 est une vue partielle agrandie en coupe axiale d'un disque et de ses moyens d'amortissement ;
- la figure 4 est une vue en coupe partielle selon la ligne IV-IV de la figure 3 ;
- la figure 5 est une vue correspondant à la figure 3 et représentant des moyens supplémentaires d'amortissement.

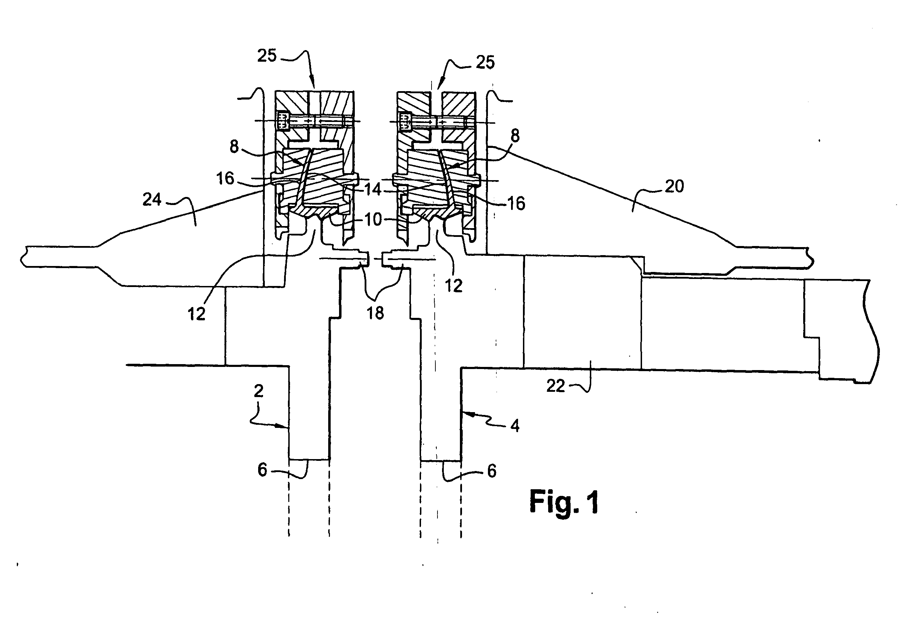

On se réfère d'abord à la figure 1 qui représente schématiquement des éléments essentiels d'une machine de soudage par friction de deux disques aubagés monoblocs 2, 4 coaxiaux.

Chaque disque aubagé monobloc 2, 4 présente un alésage 6 et porte à sa périphérie externe des aubes 8 qui sont d'une pièce avec le disque 2, 4 et qui ont été usinées sur la périphérie du disque. De façon classique, les aubes 8 s'étendent en oblique par rapport à l'axe du disque 2, 4 sur une couronne cylindrique 10 rattachée par une base annulaire étroite 12 à la périphérie externe du disque 2, 4. Chaque aube 8 comprend une surface intérieure concave ou intrados 14 et une surface extérieure convexe ou extrados 16.

Chaque disque 2, 4 comprend également, au voisinage de sa périphérie externe, une nervure cylindrique 18 qui va servir à son assemblage par soudage par friction avec la nervure cylindrique 18 d'un autre disque aubagé monobloc, la nervure 18 se trouvant du côté du disque 2, 4 où le soudage doit être effectué.

Pour le soudage par friction, un premier disque 2 est serré dans des mâchoires 24 de la machine de soudage et en appui axial sur des butées de cette machine de soudage, ce disque 2 étant mobile en rotation autour de l'axe des disques 2, 4 et immobilisé en translation axiale.

L'autre disque 4 est serré dans des mâchoires 20 et en appui axial sur des butées 22 de la machine de soudage, ce disque 4 étant fixe en rotation mais déplaçable en translation axiale vers le disque 2 mobile en rotation jusqu'à ce que les faces en regard des nervures 18 précitées frottent l'une sur l'autre pour se souder l'une à l'autre.

Le soudage par friction peut être du type inertiel ou piloté, selon que le disque 2 est entraîné en rotation par inertie pendant la friction, ou par des moyens moteurs.

Le soudage par friction engendre des vibrations intenses au niveau des aubes 8 des disques aubagés monoblocs 2, 4. L'invention a pour but d'éviter toute détérioration des aubes 8 en montant des moyens appropriés d'amortissement 25 sur les aubes des disques 2, 4.

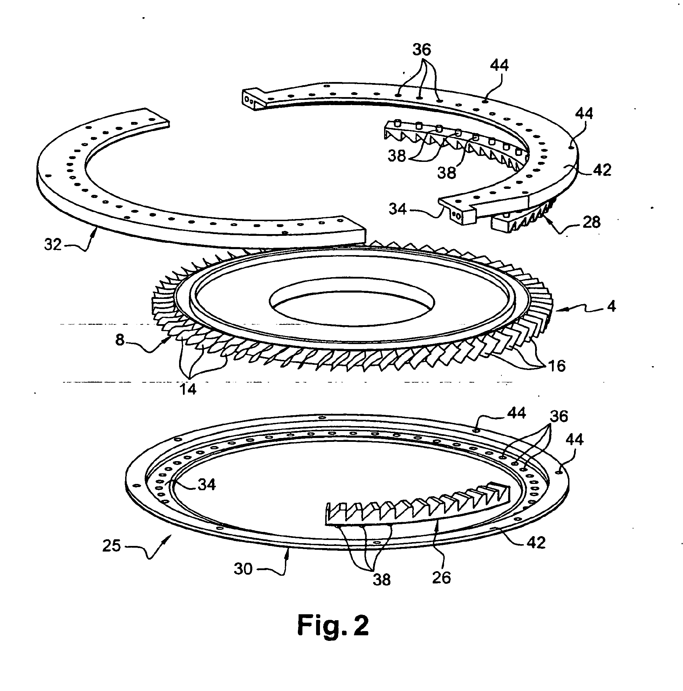

Dans le mode de réalisation représenté aux figures 2 à 4, ces moyens d'amortissement 25 comprennent des garnitures annulaires 26, 28 de recouvrement des aubes 8 et de remplissage des espaces entre les aubes 8.

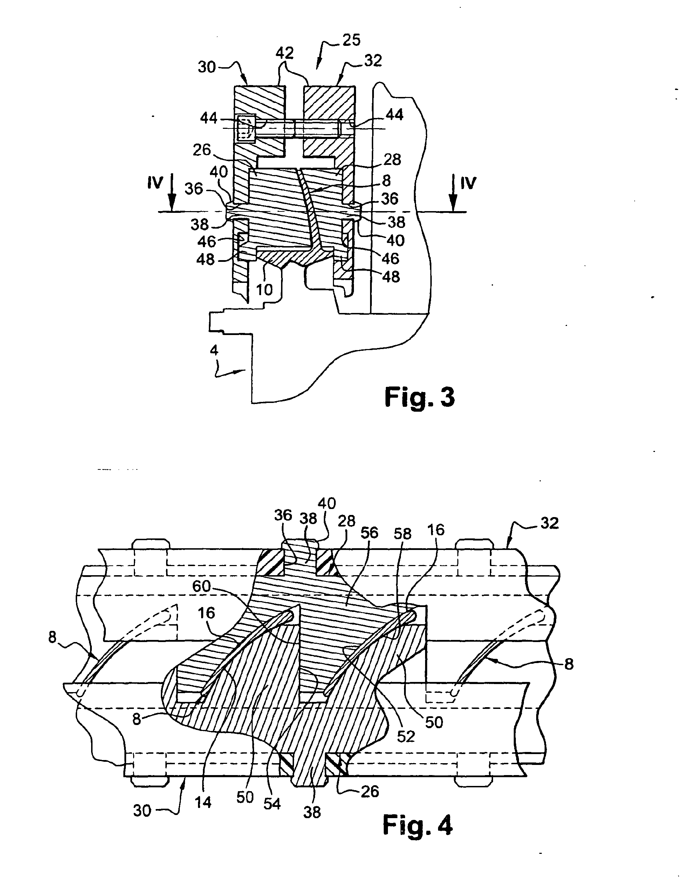

Une première garniture annulaire 26 partiellement représentée est destinée a être emboîtée sans jeu sur les intrados 14 des aubes 8, et une seconde garniture annulaire 28 partiellement représentée est destinée à être emboîtée sans jeu sur les extrados 16 des aubes 8. Les surfaces des garnitures 26, 28 en contact avec les aubes 8 présentent une forme sensiblement conjuguée des intrados 14 et extrados 16 respectivement, ce qui sera décrit plus en détail dans ce qui suit en référence à la figure 4.

Les garnitures 26, 28 sont formées d'une pluralité d'éléments destinés à être placés circonférentiellement sensiblement bout à bout. Elles sont réalisées en un matériau élastiquement déformable tel que du silicone ou un polyuréthane, pour amortir les vibrations des aubes 8 pendant le soudage par friction.

Les garnitures 26, 28 sont maintenues et serrées sur les aubes 8 par deux flasques annulaires 30, 32 montés de chaque côté du disque 4 et comprenant chacun une face annulaire radiale 34 d'appui et de support des garnitures 26, 28 précitées.

Les flasques 30, 32 sont formés de préférence par deux éléments semi-circulaires qui sont assemblés l'un à l'autre par des moyens appropriés, par exemple par boulonnage. Les flasques 30, 32 comprennent sur une partie sensiblement médiane de leur face radiale 34 des cavités ou des orifices 36 de réception de plots 38 formés en saillie sur la surface des garnitures 26, 28 opposée à celle en contact avec les aubes 8 du disque 4.

Les plots 38 et les cavités 36 associées permettent le centrage et le positionnement des garnitures 26, 28 ou des éléments de garniture sur les flasques annulaires 30, 32. Les plots 38 ont une longueur axiale supérieure à l'épaisseur des flasques annulaires 30, 32 au niveau de leur face radiale 34, et comprennent sur leur extrémité libre débouchant sur la face du flasque 30, 32 opposée à la face radiale 34, un rebord annulaire externe 40 permettant le retenue de la garniture 26, 28 ou des éléments de garniture sur le flasque 30, 32 lors de l'assemblage des moyens d'amortissement 25 sur les aubes 8.

Chaque flasque 30, 32 comprend en outre un rebord cylindrique 42 orienté vers l'autre flasque 32, 30 à sa périphérie radialement externe située autour des aubes 8, ce rebord 42 présentant des orifices 44 de passage de moyens de serrage axial des garnitures 26, 28 sur les aubes 8 du disque, tels par exemple que des boulons ou des vis.

Le degré de serrage axial des garnitures 26, 28 par les flasques 30, 32 doit être déterminé de façon optimale pour assurer un bon amortissement des vibrations des aubes 8. Pour cela, on peut placer des cales de réglage ayant une épaisseur prédéterminée entre les faces en regard des rebords 42 des flasques 30, 32 ou bien utiliser une clef de serrage dynamométrique pour actionner les moyens de serrage précités des garnitures 26, 28.

Les flasques 30, 32 comprennent également sur la partie radialement interne de leur face radiale 34, une rainure annulaire 46 de logement d'un bord radialement interne 48 en saillie des garnitures 26, 28, les bords 48 des garnitures étant destinés à être appliqués et serrés sur la couronne périphérique 10 précitée du disque 4 par les flasques 30, 32 et les moyens de serrage associés.

La figure 4 est une vue en coupe partielle selon la ligne IV-IV de la figure 3 et illustre la forme des surfaces des garnitures 26, 28 en contact avec les aubes 8. Les garnitures 26, 28 ou les éléments de garniture peuvent avantageusement être réalisés dans des moules fabriqués par stéréolithographie à partir des fichiers numériques des formes des aubes 8.

La garniture 26 destinée à être emboîtée sur les intrados 14 des aubes 8 comprend des parties 50 en dents de scie angulairement régulièrement réparties, présentant une face convexe 52 destinée à s'appliquer sur un intrados 14 d'une aube 8 et une face radiale 54 qui s'étend entre deux aubes 8. La distance entre deux parties 50 successives est sensiblement égale à la distance entre deux aubes 8 successives.

La garniture 28 destinée à être emboîtée sur les extrados 16 des aubes 8 comprend des parties 56 en dents de scie angulairement régulièrement réparties, présentant une face concave 58 destinée à s'appliquer sur un extrados 16 d'une aube 8 et une face radiale 60 destinée à s'appliquer contre la face radiale 54 précitée d'une partie 50 de la garniture 26 précitée.

Les parties 50, 56 des garnitures 26, 28 s'emboîtent les unes dans les autres et sur les aubes 8 sensiblement sans jeu, sauf au niveau des extrémités des dents de scie formées par les parties 50 et 56, de façon à ce que les garnitures 26 et 28 puissent être serrées sur les aubes 8 sans que la compression de leur matière constitutive s'oppose à ce serrage.

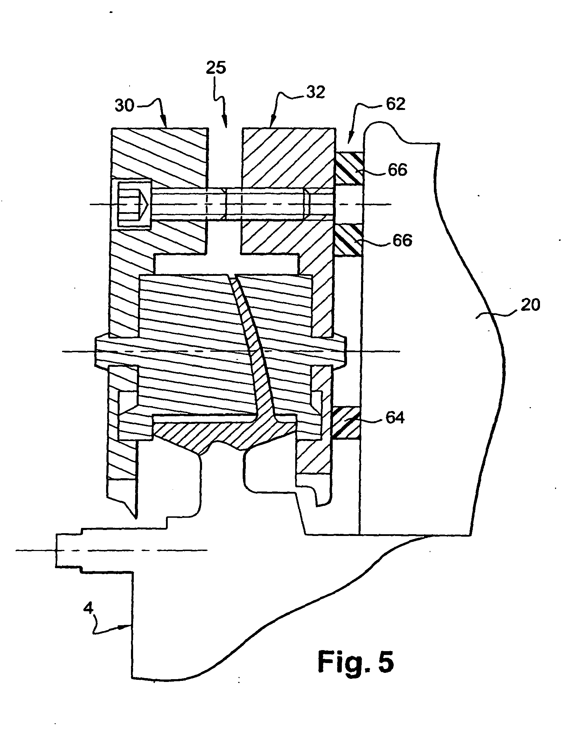

En figure 5, on a représenté des moyens supplémentaires d'amortissement 62 disposés entre le flasque 32 du disque 4 et une face radiale de la mâchoire 20 de la machine de soudage. Des moyens d'amortissement peuvent aussi être disposés entre le flasque 32 du disque 2 et une face radiale correspondante de la mâchoire 24 de la machine de soudage.

Ces moyens supplémentaires d'amortissement 62 sont en particulier utilisés pour des aubes de grande taille qui ont des amplitudes vibratoires plus importantes à leurs extrémités externes que des aubes de petite taille.

Ces moyens 62 comprennent des blocs d'élastomère qui peuvent avoir des duretés différentes et qui sont montés de façon précontrainte entre les flasques 30, 32 et les mâchoires 24, 20 de la machine de soudage. On positionnera préférentiellement des blocs 64 de dureté plus faible sur la partie radialement interne des flasques, et des blocs 66 de dureté plus importante sur la partie radialement externe des flasques. Typiquement, l'élastomère utilisé pour la réalisation des garnitures 26, 28 et des blocs 64, 66 a une dureté comprise entre 40 et 50 Shore A, par exemple.

## Revendications

1. Procédé d'assemblage de disques aubagés monoblocs (2, 4), en particulier d'un compresseur d'un turboréacteur, **caractérisé en ce qu'**il consiste à monter des moyens d'amortissement (25) des vibrations sur et entre les aubes (8) des disques (2, 4), puis à souder les disques (2, 4) entre eux par friction, les moyens d'amortissement comprenant des moyens de recouvrement des aubes (8) et de remplissage des espaces entre les aubes (8) réalisés en un matériau élastiquement déformable.

2. Procédé selon la revendication 1, **caractérisé en ce qu'**il consiste à usiner les aubes (8) des disques (2, 4) avant de souder les disques (2, 4) entre eux par friction.

3. Procédé selon la revendication 1 ou 2, **caractérisé en ce qu'**il consiste également à monter des moyens supplémentaires (62) d'amortissement des vibrations entre les moyens d'amortissement (25) montés sur les aubes (8) d'un disque (4) pendant le soudage par friction et la partie de la machine de soudage qui se trouve en regard des moyens d'amortissement (25) montés sur les aubes (8).

4. Procédé selon la revendication 3, **caractérisé en ce que** les moyens supplémentaires (62) d'amortissement sont des blocs d'élastomère (64, 66) serrés entre ladite partie de la machine de soudage et les moyens d'amortissement (25) montés sur les aubes (8).

5. Dispositif d'amortissement des vibrations des aubes (8) d'un disque aubagé monobloc (2, 4), en particulier d'un compresseur d'un turboréacteur, ce dispositif étant destiné à être monté sur les aubes (8) du disque (2, 4) pour amortir les vibrations de ces aubes (8) pendant l'assemblage du disque (2) sur un autre disque (4) par soudage par friction, **caractérisé en ce qu'**il comprend des moyens de recouvrement des aubes (8) et de remplissage des espaces entre les aubes (8), réalisés en un matériau élastiquement déformable, et des moyens de maintien et de serrage des moyens de recouvrement et de remplissage montés sur les aubes (8).

6. Dispositif selon la revendication 5, **caractérisé en ce que** les moyens de recouvrement et de remplissage comprennent des garnitures annulaires (26, 28) destinées à être emboîtées sur les intrados (14) et extrados (16) des aubes (8), respectivement.

7. Dispositif selon la revendication 6, **caractérisé en ce que** les surfaces des garnitures annulaires (26, 28) destinées à venir au contact des aubes (8) ont des formes conjuguées de celles des aubes (8).

8. Dispositif selon la revendication 6 ou 7, **caractérisé en ce qu'**il comprend une garniture annulaire (26) destinée à être appliquée sur la face amont des aubes (8) et du disque (2, 4) et une garniture annulaire (28) destinée à être appliquée sur la face aval des aubes (8) et du disque (2, 4), les faces en regard de ces garnitures (26, 28) ayant des formes qui sont conjuguées de celles des aubes (8) et qui sont sensiblement complémentaires.

9. Dispositif selon l'une des revendications 6 à 8, **caractérisé en ce que** chaque garniture annulaire (26, 28) est réalisée en plusieurs éléments destinés à être placés circonférentiellement bout à bout.

10. Dispositif selon l'une des revendications 6 à 9, **caractérisé en ce que** les garnitures (26, 28) sont en élastomère, par exemple en silicone ou en polyuréthane.

11. Dispositif selon l'une des revendications 6 à 10, **caractérisé en ce que** les moyens de maintien et de serrage des garnitures (26, 28) comprennent deux flasques annulaires (30, 32) en matériau rigide comportant chacun une face annulaire radiale (34) d'appui et de support d'une garniture annulaire (26, 28) et un rebord périphérique (42) pourvu de moyens de serrage axial des garnitures (26, 28) sur les aubes (8) du disque (2, 4).

12. Dispositif selon la revendication 11, **caractérisé en ce que** les moyens de serrage axial comprennent des boulons ou des vis.

13. Dispositif selon la revendication 11 ou 12, **caractérisé en ce qu'**il comprend des moyens de centrage et de positionnement des garnitures (26, 28) sur les flasques annulaires (30, 32), tels par exemple que des plots (38) formés en saillie sur les garnitures (26, 28) et reçus dans des cavités ou des orifices (36) correspondants des flasques (30, 32).

14. Dispositif selon l'une des revendications 11 à 13, **caractérisé en ce que** chaque flasque (30, 32) est réalisé en deux éléments semi-circulaires assemblés de façon amovible et démontable, par exemple par boulonnage.

15. Dispositif selon l'une des revendications 11 à 14, **caractérisé en ce qu'**il comprend des cales de réglage destinées à être placées entre les flasques (30, 32) pour déterminer un degré de serrage axial des garnitures (26, 28) par les flasques (30, 32).

16. Dispositif selon l'une des revendications 11 à 15, **caractérisé en ce que** les garnitures (26, 28) comprennent des rebords annulaires radialement internes (48) destinés à être appliqués et serrés par les flasques (30, 32) sur une couronne périphérique (10) du disque (36) sur laquelle sont formées les aubes (8).

17. Dispositif selon l'une des revendications 7 à 16, **caractérisé en ce que** les garnitures (26, 28) sont réalisées dans des moules fabriqués par stéréolithographie à partir des fichiers numériques des formes des aubes (8).

## Claims

1. A method of assembling together one-piece bladed-disks (2, 4), in particular disks of a turbojet compressor, the method being **characterized in that** it consists in mounting vibration damper means (25) on and between the blades (8) of the disks (2, 4), and then in welding the disks (2, 4) together by friction welding, the damper means comprising means for covering the blades (8) and filling the gaps between the blades (8) made of an elastically deformable material.

2. A method according to claim 1, **characterized in that** it consists in machining the blades (8) of the disks (2, 4) before welding the disks (2, 4) together by friction welding.

3. A method according to claim 1 or claim 2, **characterized in that** it also consists in mounting additional vibration damper means (62) between the damper means (25) mounted on the blades (8) of a disk (4) during friction welding and the portion of the welding machine that faces said damper means (25) mounted on the blades (8).

4. A method according to claim 3, **characterized in that** the additional damper means (62) are elastomer blocks (64, 66) clamped between said portion of the welding machine and the damper means (25) mounted on the blades (8).

5. A device for damping vibration of the blades (8) of a one-piece bladed disk (2, 4), in particular for a turbojet compressor, the device being designed to be mounted on the blades (8) of the disk (2, 4) to damp vibration of said blades (8) while the disk (2) is being assembled to another disk (4) by friction welding, the device being **characterized in that** it comprises covering and filler means for covering the blades (8) and filling the gaps between the blades (8), said means being made of an elastically deformable material, and holding and clamping means for holding and clamping the covering and filler means mounted on the blades (8).

6. A device according to claim 5, **characterized in that** the covering and filler means comprise annular linings (26, 28) designed to be engaged on the concave faces (14) and the convex faces (16), respectively, of the blades (8).

7. A device according to claim 6, **characterized in that** the surfaces of the annular linings (26, 28) that are designed to come into contact with the blades (8) are of shapes that are complementary to the shapes of the blades (8) .

8. A device according to claim 6 or claim 7, **characterized in that** it includes an annular lining (26) for pressing against the upstream faces of the blades (8) and of the disk (2, 4), and an annular lining (28) for pressing against the downstream faces of the blades (8) and of the disk (2, 4), the facing faces of the linings (26, 28) being of shapes that are complementary to the shapes of the blades (8) and being substantially complementary to each other.

9. A device according to any one of claims 6 to 8, **characterized in that** each annular lining (26, 28) is made up of a plurality of elements designed to be placed end to end around a circumference.

10. A device according to any one of claims 6 to 9, **characterized in that** the linings (26, 28) are made of elastomer, e.g. of silicone or of polyurethane.

11. A device according to any one of claims 6 to 10, **characterized in that** the means for holding and clamping the linings (26, 28) comprise two annuluses (30, 32) of rigid material, each having a radial annular face (34) for pressing against and supporting one of the annular linings (26, 28) and a peripheral rim (42) provided with means for axially clamping the linings (26, 28) against the blades (8) of the disk (2, 4).

12. A device according to claim 11, **characterized in that** the axial clamping means comprise screws or bolts.

13. A device according to claim 11 or claim 12, **characterized in that** it includes means for centering and positioning the linings (26, 28) on the annuluses (30, 32), such as, for example, studs (38) formed to project from the linings (26, 28) and received in corresponding cavities or orifices (36) of the annuluses (30, 32).

14. A device according to any one of claims 11 to 13, **characterized in that** each annulus (30, 32) is made of two semicircular elements that are assembled together in releasable and separable manner, e.g. by bolting.

15. A device according to any one of claims 11 to 14, **characterized in that** it includes adjustment spacers for placing between the annuluses (30, 32) to determine the degree to which the linings (26, 28) are clamped axially by the annuluses (30, 32).

16. A device according to any one of claims 11 to 15, **characterized in that** the linings (26, 28) have radially inner annular rims (48) for being pressed and clamped by the annuluses (30, 32) against a peripheral ring (10) of the disk (36) on which the blades (8) are formed.

17. A device according to any one of claims 7 to 16, **characterized in that** the linings (26, 28) are made in molds fabricated by stereolithography from digital files numerically specifying the shapes of the blades (8).

## Patentansprüche

1. Verfahren zur Montage von einstückigen beschaufelten Scheiben (2, 4), insbesondere eines Kompressors eines Strahltriebwerks, **dadurch gekennzeichnet, daß** es darin besteht, Mittel (25) zum Dämpfen der Vibrationen an und zwischen den Schaufeln (8) der Scheiben (2, 4) anzubringen, dann die Scheiben (2, 4) durch Reibung miteinander zu verschweißen, wobei die Dämpfungsmittel Mittel zum Bedecken der Schaufeln (8) und zum Füllen der Räume zwischen den Schaufeln (8) aufweisen, die aus einem elastisch verformbaren Material hergestellt sind.

2. Verfahren nach Anspruch 1, **dadurch gekennzeichnet, daß** es darin besteht, die Schaufeln (8) der Scheiben (2, 4) zu bearbeiten, bevor die Scheiben (2, 4) miteinander durch Reibung verschweißt werden.

3. Verfahren nach Anspruch 1 oder 2, **dadurch gekennzeichnet, daß** es auch darin besteht, zusätzliche Mittel (62) zum Dämpfen der Vibrationen zwischen den Dämpfungsmitteln (25), die an den Schaufeln (8) einer Scheibe (4) während des Reibschweißens angebracht werden, und dem Teil der Schweißmaschine anzubringen, der sich gegenüber den an den Schaufeln (8) angebrachten Dämpfungsmitteln (25) befindet.

4. Verfahren nach Anspruch 3, **dadurch gekennzeichnet, daß** die zusätzlichen Dämpfungsmittel (62) Elastomerblöcke (64, 66) sind, die zwischen dem Teil der Schweißmaschine und den an den Schaufeln (8) angebrachten Dämpfungsmitteln (25) eingespannt sind.

5. Dämpfungsvorrichtung für die Vibrationen der Schaufeln (8) einer einstückigen beschaufelten Scheibe (2, 4), insbesondere eines Kompressors eines Strahltriebwerks, wobei diese Vorrichtung dazu bestimmt ist, an den Schaufeln (8) der Scheibe (2, 4) angebracht zu werden, um die Vibrationen dieser Schaufeln (8) während der Montage der Scheibe (2) an einer anderen Scheibe (4) durch Reibschweißen zu dämpfen, **dadurch gekennzeichnet, daß** sie Mittel zum Bedecken der Schaufeln (8) und zum Füllen der Räume zwischen den Schaufeln (8), die aus einem elastisch verformbaren Material hergestellt sind, sowie Mittel zum Halten und Einspannen der Mittel zum Bedecken und zum Füllen aufweist, die an den Schaufeln (8) angebracht sind.

6. Vorrichtung nach Anspruch 5, **dadurch gekennzeichnet, daß** die Mittel zum Bedecken und Füllen ringförmige Einsätze (26, 28) aufweisen, die dazu bestimmt sind, an der Druckseite (14) bzw. der Saugseite (16) der Schaufeln (8) eingepaßt zu werden.

7. Vorrichtung nach Anspruch 6, **dadurch gekennzeichnet, daß** die Flächen der ringförmigen Einsätze (26, 28), die dazu bestimmt sind, mit den Schaufeln (8) in Kontakt zu gelangen, Formen haben, die mit denjenigen der Schaufeln (8) gekoppelt sind.

8. Vorrichtung nach Anspruch 6 oder 7, **dadurch gekennzeichnet, daß** sie einen ringförmigen Einsatz (26), der dazu bestimmt ist, an der stromaufwärts gelegenen Seite der Schaufeln (8) und der Scheibe (2, 4) angebracht zu werden, und einen ringförmigen Einsatz (28) aufweist, der dazu bestimmt ist, an der stromabwärts gelegenen Seite der Schaufeln (8) und der Scheibe (2, 4) angebracht zu werden, wobei die Seiten gegenüber dieser Einsätze (26, 28) Formen haben, die mit denjenigen der Schaufeln (8) gekoppelt sind und im wesentliche komplementär sind.

9. Vorrichtung nach einem der Ansprüche 6 bis 8, **dadurch gekennzeichnet, daß** jeder ringförmige Einsatz (26, 28) aus mehreren Elementen hergestellt ist, die dazu bestimmt sind, am Umfang nebeneinander gesetzt zu werden.

10. Vorrichtung nach einem der Ansprüche 6 bis 9, **dadurch gekennzeichnet, daß** die Einsätze (26, 28) aus Elastomer bestehen, z.B. aus Silicon oder aus Polyurethan.

11. Vorrichtung nach einem der Ansprüche 6 bis 10, **dadurch gekennzeichnet, daß** die Mittel zum Halten und Einspannen der Einsätze (26, 28) zwei ringförmige Flansche (30, 32) aus einem starren Material aufweisen, die jeweils eine radiale ringförmige Seite zur Anlage und zum Stützen eines ringförmigen Einsatzes (26, 28) und einen Umfangsrand (42) aufweisen, der mit Mitteln zum axialen Einspannen der Einsätze (26, 28) an den Schaufeln (8) der Scheibe (2, 4) versehen ist.

12. Vorrichtung nach Anspruch 11, **dadurch gekennzeichnet, daß** die Mittel zum axialen Einspannen Schraubbolzen oder Schrauben aufweisen.

13. Vorrichtung nach Anspruch 11 oder 12, **dadurch gekennzeichnet, daß** sie Mittel zum Zentrieren und Positionieren der Einsätze (26, 28) wie z.B. Stopfen (38) aufweist, die vorspringend an den Einsätzen (26, 28) ausgebildet und in entsprechenden Hohlräumen oder Öffnungen (36) der Flansche (30, 32) aufgenommen sind.

14. Vorrichtung nach einem der Ansprüche 11 bis 13, **dadurch gekennzeichnet, daß** jeder Flansch (30, 32) aus zwei halbkreisförmigen Elementen hergestellt ist, die auf abnehmbare und zerlegbare Weise montiert sind, z.B. durch eine Bolzenverbindung.

15. Vorrichtung nach einem der Ansprüche 11 bis 14, **dadurch gekennzeichnet, daß** sie Einstellkeile aufweist, die dazu bestimmt sind, zwischen die Flansche (30, 32) gesetzt zu werden, um einen axialen Einspannungsgrad der Einsätze (26, 28) durch die Flansche (30, 32) zu bestimmen.

16. Vorrichtung nach einem der Ansprüche 11 bis 15, **dadurch gekennzeichnet, daß** die Einsätze (26, 28) radial innere ringförmige Ränder (48) aufweisen, die dazu bestimmt sind, durch die Flansche (30, 32) an einem Umfangskranz (10) der Scheibe (36) angelegt und eingespannt zu werden, an dem die Schaufeln (8) ausgebildet sind.

17. Vorrichtung nach einem der Ansprüche 7 bis 16, **dadurch gekennzeichnet, daß** die Einsätze (26, 28) in Formen hergestellt werden, die durch Stereolithographie ausgehend von digitalen Dateien der Formen der Schaufeln (8) gefertigt sind.
